# EUROPEAN PATENT APPLICATION

(11) **EP 1 975 268 A1**
(43) Date of publication of application: **01.10.2008**
(21) Application number: 07706706.4
(22) Date of filing: 05.01.2007
(51) Int. Cl.: C22C 38/00, C21D 9/46

(54) **COLD-ROLLED STEEL SHEET AND METHOD FOR MANUFACTURE THEREOF**

(30) Priority: 12.01.2006 JP 2006004373; 29.11.2006 JP 2006321279
(71) Applicant: JFE Steel Corporation, Tokyo, 100-0011 (JP)
(72) Inventor: YASUHARA, Eiko, Chiyoda-ku, Tokyo, 100-0011 (JP); NAKAGAWA, Nobuko, Chiyoda-ku, Tokyo, 100-0011 (JP); SUGIHARA, Reiko, Chiyoda-ku, Tokyo, 100-0011 (JP); INOUE, Tadashi, Chiyoda-ku, Tokyo, 100-0011 (JP)
(74) Representative: HOFFMANN EITLE
(86) International application number: PCT/JP2007/050364
(87) International publication number: WO 2007/080992

(57) **Abstract**

A cold-rolled steel sheet having superior non-ageing properties and low planar anisotropy can be produced at low cost without decreased productivity. This cold-rolled steel sheet contains, by mass, 0.010% to 0.040% carbon, 0.02% or less silicon, 1.0% to 2.5% manganese, 0.02% or less phosphorus, 0.015% or less sulfur, 0.004% or less nitrogen, and 0.020% to 0.070% aluminum, the balance being iron and incidental impurities. The steel sheet has a microstructure including a ferrite phase and a second phase. The volume percentage of the second phase is 0.2% to less than 10%. The steel sheet has an AI of 50 MPa or less, -0.20 ≤ Δr ≤ 0.20, and a thickness of 0.5 mm.

## Description

### Technical Field

The present invention relates to cold-rolled steel sheets with a thickness of 0.5 mm or less that are suitable for battery cans.

### Background Art

A combination of deep drawing and ironing is used to process cold-rolled steel sheets into battery cans. Examples thereof include drawing and ironing (DI), in which a cup is drawn and ironed; stretch drawing, in which a cup is drawn, is stretched, bent, and bent back, and is optionally ironed; and multistage drawing, in which a cup is drawn in several stages before being ironed.

Battery can forming needs prevention of earing, that is, an unevenness in the height of cans in the circumferential direction thereof after the forming. It is commonly known that the height of ear correlates significantly with Δr, which represents the planar anisotropy of r (Lankford value), a measure of deep drawability of, for example, cold-rolled steel sheets. Specifically, the height of ear is expected to be decreased as Δr approaches zero. To prevent the earing, therefore, Δr is preferably zero; in general, substantially no earing occurs within the range of -0.20 ≤ Δr ≤ 0.20.

In addiction, wrinkle called stretcher strains can occur during deep drawing. This results in a poor appearance and a defective shape, thus leading to a poor can shape. To prevent this, cold-rolled steel sheets for battery cans require superior non-ageing properties; in practice, they require an ageing index (AI) of 50 MPa or less.

Japanese Unexamined Patent Application Publication No. 2002-88446, for example, discloses a nickel-plating cold-rolled steel sheet for battery cans which has superior non-ageing properties and low planar anisotropy. This steel sheet contains, by mass, 0.015% to 0.06% carbon, 0.03% or less silicon, 0.1% to 0.6% manganese, 0.02% or less phosphorus, 0.04% or less sulfur, 0.03% to 0.10% chromium, 0.03% to 0.12% aluminum, 0.0030% or less nitrogen, and boron in an amount of 5 ppm ≤ B-(11/14)N ≤ 30 ppm, the balance being iron and incidental impurities. The steel sheet has a surface roughness, Ra, of 0.02 to 0.2 µm and is advantageous in terms of anisotropy. In the production of the steel sheet, solute carbon is precipitated using a box annealing furnace to improve non-ageing properties.

Japanese Unexamined Patent Application Publication No. 4-337049 discloses a high-strength, high-formability cold-rolled steel sheet designed for beverage can applications which typically has a thickness of about 0.15 to 0.25 mm. This steel sheet contains, by mass, 0.15% or less carbon, 0.10% or less silicon, 3.00% or less manganese, 0.150% or less aluminum, 0.100% or less phosphorus, 0.010% or less sulfur, and 0.0100% or less nitrogen, the balance being iron and incidental impurities. The steel sheet has a complex-phase microstrucuture including a ferrite phase and a second phase that is a martensite phase or a bainite phase, and has a tensile strength (TS) of 40 kgf/mm² or more, an elongation of 15% or more, a bake hardenability of 5 kgf/mm² (50 MPa) or more, and low planar anisotropy. The production of the steel sheet employs a double-cold-rolling, double-annealing process to remedy a layered structure and reduce planar anisotropy.

As a technique that has become publicly known after the first basic (priority) application of the present application, Japanese Unexamined Patent Application Publication No. 2006-137988 discloses a steel sheet for battery cans which contains 0.04% to 0.60% carbon, 0.80% to 3.0% or less silicon, 0.3% to 3.0% manganese, 0.06% or less phosphorus, 0.06% or less sulfur, 0.1% or less aluminum, and 0.0010% to 0.0150% or less nitrogen, the balance being iron and incidental impurities. This steel sheet is a high-strength steel sheet with a tensile strength of 450 MPa or more which can provide sufficient strength for battery cans even if the wall thickness thereof is reduced to increase the capacities of compact batteries.

Attempts have recently been made to reduce the wall thickness of battery cans for increased battery capacities. Such attempts demand high-strength steel sheets with tensile strengths of 400 MPa or more; the technique disclosed in Japanese Unexamined Patent Application Publication No. 2006-137988 above aims to meet that demand. High-strength steel sheets for battery cans are also expected to be effective for extending the lives of secondary batteries, where the steel sheets are repeatedly subjected to expansion and contraction forces.

### Disclosure of Invention

### Problems to be Solved by the Invention

However, the production of the nickel-plated steel sheet for battery cans according to Japanese Unexamined Patent Application Publication No. 2002-88446 requires strict control of the nitrogen and boron contents. If the boron content falls short of the amount required to precipitate nitrogen in the form of boron nitride (BN), an excess of nitrogen forms fine AlN grains, which undesirably induce earing. Other problems arise from the necessity of batch annealing, including nonuniform characteristics and significantly decreased productivity.

Japanese Unexamined Patent Application Publication No. 4-337049 does not mention the ageing index (AI) of the high-strength, high-workability cold-rolled steel sheet for cans; therefore, it is uncertain that the steel sheet provides superior non-ageing properties. In addition, the production of the steel sheet necessarily involves a double-cold-rolling, double-annealing process which has the problems of significantly increased manufacturing costs and decreased productivity.

The steel sheet for battery cans according to Japanese Unexamined Patent Application Publication No. 2006-137988 does not provide superior non-ageing properties. In addition, the steel sheet has the problem that it does not necessarily meet the condition -0.20 ≤ Δr ≤ 0.20, that is, does not have low planar anisotropy. Furthermore, the steel sheet can have a yield strength (YS) of not less than 400 MPa because its high strength depends on solid-solution strengthening using silicon. Such high yield strength causes problems including excessive loading in deep drawing, decreased productivity, and deterioration of dies.

An object of the present invention is to provide a cold-rolled steel sheet that can be produced at low cost without decreased productivity and that has superior non-ageing properties, namely, an AI of 50 MPa or less, and low planar anisotropy, namely, -0.20 ≤ Δr ≤ 0.20, and also to provide a method for producing the steel sheet.

Another object of the present invention is to provide as options a cold-rolled steel sheet with high strength but low YS and a method for producing the steel sheet.

### Means for Solving the Problems

The inventors have studied various methods for producing steel sheets with superior non-ageing properties and low Δr by single continuous annealing. As a result, the inventors have found that a cold-rolled steel sheet having superior non-ageing properties, namely, an AI of 50 MPa or less, and low planar anisotropy, namely, -0.20 ≤ Δr ≤ 0.20, can be produced using a composition customized based on that of a common low-carbon steel by cold rolling at a reduction rate of 80% to 88% and formation of a complex-phase microstructure including a ferrite phase and a second phase in an appropriate ratio.

The present invention has been made on the basis of the above findings.

That is, the present invention provides a cold-rolled steel sheet having superior non-ageing properties and low planar anisotropy. This steel sheet contains, by mass, 0.010% to 0.040% carbon, 0.02% or less silicon, 1.0% to 2.5% manganese, 0.02% or less phosphorus, 0.015% or less sulfur, 0.004% or less nitrogen, and 0.020% to 0.07% aluminum, the balance being iron and incidental impurities. The steel sheet has a microstructure comprising a ferrite phase and a second phase. The volume percentage of the second phase is 0.2% to less than 10%. The steel sheet has an AI of 50 MPa or less, a Δr of -0.20 or more and 0.20 or less, and a thickness of 0.5 mm or less.

The manganese content is preferably 1.8% to 2.5% by mass in view of achieving high strength and low YS.

In addition, the steel sheet of the present invention preferably further contains at least one element selected from the group consisting of chromium in an amount of 1% or less by mass, molybdenum in an amount of 1% or less by mass, and boron in an amount of 0.01% or less by mass. Among them, chromium is preferably added.

The steel sheet of the present invention can be produced by, for example, a method (production method of the present invention) including hot-rolling a slab at a finisher delivery temperature of an Ar₃ transformation point or higher and coiling the hot-rolled sheet at a coiling temperature of 540°C to 730°C, cold-rolling the hot-rolled sheet at a reduction rate of 80% to 88% to form a cold-rolled sheet, and continuously annealing the cold-rolled sheet at an annealing temperature of 700°C to 850°C. The slab contains, by mass, 0.010% to 0.040% carbon, 0.02% or less silicon, 1.0% to 2.5% manganese, 0.02% or less phosphorus, 0.015% or less sulfur, 0.004% or less nitrogen, and 0.020% to 0.07% aluminum, the balance being iron and incidental impurities.

The slab may be directly hot-rolled before it cools or, if cooled, may be reheated in a heating furnace before the hot rolling. In addition, the hot-rolled sheet may be pickled before the cold rolling. Furthermore, the annealing may be followed by temper rolling.

In the production method of the present invention, the manganese content of the slab used is preferably 1.8% to 2.5% by mass.

In the production method of the present invention, the slab used preferably further contains at least one element selected from the group consisting of chromium in an amount of 1% or less by mass, molybdenum in an amount of 1% or less by mass, and boron in an amount of 0.01% or less by mass. Among them, chromium is preferably added.

The steel sheet of the present invention can be used for battery component applications, namely, battery cans. Specifically, the steel sheet of the present invention can be processed by deep drawing (including combinations with other processes such as ironing) to form battery cans for use in the production of batteries.

### Best Mode for Carrying Out the Invention

A cold-rolled steel sheet of the present invention with superior non-ageing properties and low planar anisotropy will now be described in detail, where "%", the unit of the contents of the following constituents, represents "% by mass" unless otherwise specified.

### (1) Composition

### Carbon: 0.010% or more and to 0.040% or less

Carbon is an element having a large effect on strength in DI and deep drawing and is also important to form a second phase, a key point of the present application. If the carbon content falls below 0.010%, it cannot form the second phase or provide the required strength. If the carbon content exceeds 0.040%, an increased amount of carbide decreases workability, and non-ageing properties are deteriorated. The increased amount of carbide also increases hardness and decreases cold workability, thus excessively increasing the rolling load required for cold rolling at a reduction rate of 80% to 88% in the production method of the present application. This causes problems such as impaired cold workability, a defective shape, and degraded surface properties. Hence, the carbon content of the steel should be 0.040% or less, preferably 0.030% or less, and more preferably 0.025% or less.

### Silicon: 0.02% or less

If silicon, an impurity element, is contained in an amount of more than 0.02%, it increases hardness and significantly degrades platability. Hence, the silicon content of the steel is limited up to 0.02%. The minimum silicon content that can be achieved in industry is about 0.001%.

### Manganese: 1.0% or more and 2.5% or less

In general, manganese is an element effective for precipitating sulfur contained in the steel in the form of MnS to prevent hot cracking of slabs. Also, like carbon, manganese is important to form the second phase in the present application. A manganese content of 1.0% or more is required to stably form the second phase after single cold rolling and continuous annealing; however, a manganese content exceeding 2.5% results in significantly increased slab costs and decreased workability. Hence, the manganese content of the steel is 1.0% to 2.5%, preferably 1.3% or more.

In particular, a manganese content of 1.8% or more is preferred to achieve high strength, as has recently been demanded, without excessively increasing YS. The study by the inventors shows that this problem can be reliably avoided in the present invention if the YS is 255 MPa or less at a TS of 400 MPa or more. For that purpose, the manganese content of the steel is preferably 1.8% to 2.5%.

### Phosphorus: 0.02% or less

If phosphorus, an impurity element, is contained in an amount of more than 0.02%, it decreases workability. Hence, the phosphorus content of the steel is limited up to 0.02%. The minimum phosphorus content that can be achieved in industry is about 0.001%.

### Sulfur: 0.015% or less

If sulfur, an impurity element, is contained in an amount of more than 0.015%, it causes red shortness during hot rolling. Hence, the sulfur content of the steel is limited up to 0.015%; any lower sulfur content is preferred. The minimum sulfur content that can be achieved in industry is about 0.0001%.

### Nitrogen: 0.004% or less

If nitrogen, an impurity element, is contained in an amount of more than 0.004%, AlN precipitates during continuous casting of slabs and causes slab cracking due to hot shortness. Hence, the nitrogen content of the steel is limited up to 0.004%. The minimum nitrogen content that can be achieved in industry is about 0.0001%.

### Aluminum: 0.020% to 0.07%

Aluminum is an element required for steel deoxidation and must therefore be contained in an amount of 0.020% or more. If the aluminum content falls below 0.020%, incomplete deoxidation leaves an unstable texture which makes it difficult to, for example, stably maintain Δr within the range of -0.20 to 0.20. The upper limit of the aluminum content is 0.07% because an aluminum content exceeding 0.07% results in an increased amount of inclusions that often cause surface defects.

The balance is iron and incidental impurities. The steel preferably further contains at least one element selected from the group consisting of chromium in an amount or 1% or less, molybdenum in an amount of 1% or less, and boron in an amount of 0.01% or less for the following reasons.

### Chromium: 1% or less; molybdenum: 1% or less; boron: 0.01% or less

Chromium, molybdenum, and boron are elements effective for improving quenchability of the steel to stably form the second phase. The chromium or molybdenum content should be 1% or less, preferably 0.8% or less, and the boron content should be 0.01% or less, preferably 0.008% or less. If the chromium or molybdenum content exceeds 1%, or if the boron content exceeds 0.01%, they increase the strength of the steel and decrease its workability. For stable formation of the second phase, the chromium or molybdenum content is preferably 0.005% or more, more preferably 0.01% or more. For the same reason, the boron content is preferably 0.0002% or more.

Molybdenum and boron tend to excessively increase YS and TS. Among the above three elements, therefore, chromium is the most superior additive element in view of stably achieving a TS of 400 to 480 MPa and low YS.

### (2) Microstructure

To achieve superior non-ageing properties, namely, an AI of 50 MPa or less, the steel must have a microstructure comprising a ferrite phase and a second phase, and the volume percentage of the second phase must be 0.2% or more. Although the reason why the presence of the second phase improves the non-ageing properties has yet to be clearly understood, it is presumed that the concentration of carbon into the second phase reduces the content of solute carbon in the ferrite phase. For sufficient workability, the volume percentage of the second phase must be less than 10%, preferably 5% or less, and more preferably 3% or less. A preferred lower limit is 0.5%, more preferably 1.0%.

The second phase herein refers to a portion that has not been transformed to normal polygonal ferrite and has another phase formed or remaining therein after the cooling of the steel sheet from a temperature range higher than the single-phase ferrite range. In the present application, the major component of the second phase is a martensite phase, although it may also contain other phases such as a pearlite phase, a bainite phase, a residual austenite phase, and carbides. For improved non-ageing properties, the volume percentage of the phases other than martensite in the second phase is preferably 40% or less.

The volume percentage is regarded as being equivalent to the area percentage obtained by cross-sectional observation of the steel sheet.

To realize a complex-phase microstructure including a ferrite phase and a second phase whose volume percentage is 0.2% or more, preferably 0.5% or more, and more preferably 1.0% or more, and is less than 10%, preferably 5% or less, and more preferably 4.0% or less, the composition of the steel sheet is adjusted to the ranges described above while manufacturing conditions, particularly, continuous annealing conditions, are controlled as described later.

### (3) Other Features

The steel sheet of the present invention has an AI of 50 MPa or less so that stretcher strains can be prevented during, for example, battery can processing. In particular, an AI of 50 MPa or less can be achieved by adjusting the carbon content and the microstructure as described above.

In addition, the steel sheet of the present invention has a Δr of -0.20 to 0.20 so that earing can be suppressed during, for example, battery can processing. The values of r and Δr are mainly affected by the crystal grain orientation (texture) of the steel sheet. To realize a texture with a Δr of -0.20 to 0.20, the composition of the steel sheet is adjusted to the ranges described above while the manufacturing conditions, particularly, cold-rolling reduction rate, are controlled as described later. The value of Δr is determined by Δr = (r₀ + r₉₀ - 2 x r₄₅)/2, where r₀ is the value of r in a direction parallel to a rolling direction, r₄₅ is the value of r in a direction inclined 45° with respect to the rolling direction, and r₉₀ is the value of r in a direction inclined 90° with respect to the rolling direction.

The steel sheet of the present invention must have a thickness of 0.5 mm or less, a thickness frequently used for battery cans, and preferably has a thickness of less than 0.4 mm to meet the demand for reduced wall thickness. In addition, the thickness is preferably more than 0.25 mm, more preferably 0.3 mm or more. The composition and manufacturing conditions of the present invention are optimized so that the microstructure and the value of Δr described above can be readily achieved within the above thickness range.

The steel sheet of the present invention is preferably a high-strength, low-YS steel sheet with a TS of 400 MPa or more and a YS of 255 MPa or less, although the ranges of TS and YS are not limited thereto and may be about 380 MPa or more and about 300 MPa or less, respectively. The upper limit of TS is not specified and as high as about 600 MPa is acceptable, although a TS of 480 MPa or less is preferred in terms of workability, particularly, to reduce a burden on metal tools in ironing.

### (4) Production Method

The cold-rolled steel sheet of the present invention can be produced as follows. A slab having the above composition is produced by, for example, continuous casting. The slab is directly hot-rolled before it cools or, if cooled, is reheated and then hot-rolled. The finisher delivery temperature is the Ar₃ transformation point or higher. The sheet is then coiled at a coiling temperature of 540°C to 730°C to form a hot-rolled steel sheet. After pickling, the hot-rolled sheet is cold-rolled at a reduction rate of 80% to 88% to form a cold-rolled sheet. The cold-rolled sheet is continuously annealed at an annealing temperature of 700°C to 850°C.

The temperature for reheating the cast slab is preferably 1,050°C to 1,300°C. If the heating temperature falls below 1,050°C, it may be difficult to set the finisher delivery temperature of the hot rolling to the Ar₃ transformation point or higher. If the heating temperature exceeds 1,300°C, an increased amount of oxide forms on the surface of the cast slab and tends to easily cause surface defects. The temperature range of 1,050°C to 1,300°C is also preferred for the temperature at which the hot rolling is started in the case where the slab is directly rolled.

The finisher delivery temperature of the hot rolling is set to the Ar₃ transformation point or higher to achieve a uniform crystal grain size after the rolling and to reduce the anisotropy of the sheet in the hot-rolling step. The Ar₃ transformation point may be determined by a known method, for example, by heating a test piece and examining a change in thermal expansion coefficient during cooling using a Formaster testing apparatus.

The temperature for the coiling after the completion of the hot rolling may be set to a normal condition, namely, 540°C or more, to ensure uniform sheet shape and material homogeneity in the width direction and to fix and precipitate solute nitrogen in the form of, for example, AlN. The coiling temperature, however, must be set to 730°C or less because a coiling temperature exceeding 730°C degrades descaling properties and also makes it impossible to stably maintain low planar anisotropy due to course crystal grains.

The hot-rolled sheet thus produced is usually pickled by a common method to remove scale formed thereon.

The hot-rolled sheet is then subjected to cold rolling. The sheet must be cold-rolled at a reduction rate of 80% to 88% to meet the condition -0.20 ≤ Δr ≤ 0.20. A reduction rate falling below 80% or exceeding 88% results in increased planar anisotropy, and therefore it is difficult to meet the condition -0.20 ≤ Δr ≤ 0.20. The thickness of the cold-rolled sheet must be reduced to 0.5 mm or less, a thickness suitable for battery can applications, as described above.

The cold-rolled sheet thus produced is continuously annealed at an annealing temperature of 700°C to 850°C. The lower limit of the annealing temperature is 700°C because the steel cannot be completely recrystallized below 700°C. The upper limit is 850°C because coarse crystal grains are formed above 850°C and tend to roughen the surface during processing. In addition, the annealing is continuously performed to ensure high productivity and a cooling rate at which the second phase can be formed.

Although the soaking time for the annealing does not have to be limited, the soaking time is preferably about 30 seconds or more for stable material properties and is preferably about 180 seconds or less because a soaking time any longer than this only results in increased costs.

The manufacturing conditions other than the annealing temperature, as described above, do not have to be limited, and the annealing may be performed on a normal continuous annealing line. The average cooling rate after the annealing is preferably 5°C/s to 50°C/s, a range that can be achieved in normal continuous annealing operation for a steel sheet with a thickness of 0.5 mm or less. The volume percentage of the second phase can more easily be controlled within a preferred range, for example, 5% or less, in the continuous annealing if the sheet has a more appropriate thickness, for example, more than 0.25 mm.

The annealing is preferably followed by temper rolling for adjusting the shape and surface roughness of the steel sheet. The steel sheet is preferably temper-rolled to an elongation within a normal range, namely, 0.3% to 2.0%.

Under the above manufacturing conditions, an AI of 50 MPa or less and -0.20 ≤ Δr ≤ 0.20 can be achieved.

The annealed steel sheet may optionally be plated with nickel, tin, chromium, or an alloy thereof. After the plating, additionally, the steel sheet may be subjected to diffusion annealing within the temperature range of about 300°C to 800°C to form a diffusion alloy plating. The steel sheet after the annealing or plating may also be subjected to a variety of surface treatments or, for example, resin coating.

The steel sheet of the present invention is suitable for battery component applications, namely, battery cans, and can be used to produce battery cans with high steel-sheet yield. Battery cans, as described above, can be produced by a variety of processing methods such as DI. While conventional battery cans have a wall thickness of 0.23 to 0.25 mm, the steel sheet of the present invention can be used to form a battery can having a wall thickness of 0.18 to 0.21 mm; that is, the wall thickness can be reduced by about 10% (TS of steel sheet: 380 MPa) to 30% (TS of steel sheet: about 500 MPa). The type of battery (chemical battery) to which the steel sheet of the present invention can be applied is not particularly limited; it can be applied to, for example, dry batteries and secondary batteries (including lithium-ion batteries, nickel metal-hydride batteries, and nickel-cadmium batteries). The steel sheet of the present invention is particularly suitable for secondary batteries.

When batteries are produced, other necessary materials and members are incorporated in or attached to battery cans, including positive-electrode materials, negative-electrode materials, separators, and terminals.

### EXAMPLES

### EXAMPLE 1

Steel Nos. 1 to 4 were prepared by smelting according to the compositions shown in Table 1 and were formed into slabs by continuous casting. These slabs were heated to 1,250°C, were hot-rolled at a finisher delivery temperature of 900°C, which was above or equal to the Ar₃ transformation point of these steels, and were coiled at a coiling temperature of 700°C to form hot-rolled sheets. After pickling, the hot-rolled sheets were cold-rolled to a thickness of 0.38 mm at the reduction rates shown in Table 2. Subsequently, the sheets were subjected to recrystallization annealing on a continuous annealing line at an annealing temperature of 750°C for a soaking time of 45 seconds and were temper-rolled to an elongation of 0.5% to prepare samples of Steel Sheet Symbols A to H and Z. The cooling rate in the continuous annealing was 15°C/s to 25°C/s.

Because Steel Sheet Symbol H was difficult to cold-roll even at a reduction rate of 80% (the lower limit in the present invention) due to an excessive cold-rolling load, the sample was subjected to first cold rolling at a reduction rate of 65%, annealing at an annealing temperature of 800°C for a soaking time of 30 seconds, second rolling at a reduction rate of 70%, and final recrystallization annealing.

The resultant samples were examined for Δr, AI, YS, TS, and microstructure by the following methods.

Δr: JIS No. 5 tensile test pieces were cut from the resultant sample steel sheets in directions inclined 0°, 45°, and 90° with respect to the rolling direction. The values of r in the 0°, 45°, and 90° directions, namely, r₀, r₄₅, and r₉₀, respectively, were measured according to JIS Z 2241 to determine Δr = (r₀ + r₉₀ - 2 x r₄₅)/2.

AI: JIS No. 5 tensile test pieces were cut from the resultant sample steel sheets in a direction inclined 0° with respect to the rolling direction. After a tensile strain of 7.5% was applied to introduce mobile dislocations, the test pieces were subjected to an isothermal treatment at 100°C for one hour to determine the AI by the following equation:

AI = (lower yield load after isothermal treatment - load after introduction of strain)/(cross-sectional area of parallel portion of test piece before introduction of strain)

YS and TS: JIS No. 5 tensile test pieces were cut from the resultant sample steel sheets in a direction inclined 0° with respect to the rolling direction. The test pieces were subjected to a tensile test at a tensile rate of 10 mm/min to determine the yield strength, YS, and the tensile strength, TS.

Microstructure: The microstructures of sections of the resultant sample steel sheets which were taken along the thickness were examined by scanning electron microscopy (SEM) to determine the type and volume percentage of the second phase.

The results are shown in Table 2. Steel Sheet Symbols A, B, D, and E, according to the present invention, had a Δr within the range of -0.20 to 0.20 and an AI of not more than 50 MPa. These results demonstrate that the steel sheets had superior non-ageing properties and low planar anisotropy. In addition, although Steel Sheet Symbols A, B, D, and E, according to the present invention, contained 1.8% or more manganese, they had a YS of not more than 255 MPa and a TS within the range of 400 to 480 MPa. These results demonstrate that they were high-strength steel sheets with high workability. For the microstructure of the steel sheets of the present invention, the phase other than the second phase, shown in Table 2, was a ferrite phase.

**Table 1**

| | | | | | | | | | |
|---|---|---|---|---|---|---|---|---|---|
| (% by mass) | | | | | | | | | |

| Steel No. | C | Si | Mn | P | S | Al | N | Cr | Remarks |
|---|---|---|---|---|---|---|---|---|---|
| 1 | 0.018 | 0.01 | 1.8 | 0.01 | 0.001 | 0.045 | 0.0030 | - | Within the scope of the invention |
| 2 | 0.020 | 0.02 | 2.0 | 0.01 | 0.001 | 0.045 | 0.0028 | 0.2 | Within the scope of the invention |
| 3 | 0.008 | 0.02 | 1.4 | 0.01 | 0.001 | 0.045 | 0.0028 | 0.2 | Beyond the scope of the invention |
| 4 | 0.045 | 0.02 | 1.8 | 0.02 | 0.004 | 0.040 | 0.0027 | 0.2 | Beyond the scope of the invention |

**Table 2**

| Steel Sheet Symbol | Steel No. | Reduction rate in cold rolling (%) | Second phase | | Δr | Al (MPa) | YS (MPa) | TS (MPa) | Remarks |
|---|---|---|---|---|---|---|---|---|---|
| | | | Type* | Volume percentage | | | | | |
| A | 1 | 80 | M | 1.5 | 0.18 | 32 | 220 | 420 | Invention example |
| B | | 84 | M | 1.5 | 0.08 | 28 | 235 | 450 | Invention example |
| C | | 93 | M | 2.0 | -0.42 | 35 | 287 | 490 | Comparative example |
| D | 2 | 82 | M | 2.4 | 0.10 | 34 | 241 | 448 | Invention example |
| E | | 85 | M | 0.8 | -0.05 | 40 | 250 | 460 | Invention example |
| F | 3 | 82 | - | 0 | 0.28 | 60 | 230 | 385 | Comparative example |
| G | | 85 | - | 0 | -0.25 | 75 | 240 | 390 | Comparative example |
| H | 4 | First: 65% Second: 70% | M | 3.8 | 0.10 | 60 | 230 | 440 | Comparative example |
| Z | 1 | 77 | M | 0.3 | 0.67 | 60 | 250 | 400 | Comparative example |

| | | | | | | | | | |
|---|---|---|---|---|---|---|---|---|---|
| *M: Martensite phase | | | | | | | | | |

### EXAMPLE 2

Steel Nos. 5 to 10 were prepared by smelting according to the compositions shown in Table 3 and were formed into slabs by continuous casting. These slabs were hot-rolled under the same conditions as in Example 1, were pickled, and were cold-rolled to a thickness of 0.38 mm at a reduction rate of 84%. Subsequently, the sheets were subjected to recrystallization annealing and temper rolling under the same conditions as in Example 1 to prepare samples of Steel Sheet Symbols I to N. The resultant samples were examined as in Example 1.

The results are shown in Table 4. Steel Sheet Symbols I to N, according to the present invention, had a Δr within the range of -0.20 to 0.20 and an AI of not more than 50 MPa. These results demonstrate that the steel sheets had superior non-ageing properties and low planar anisotropy. Of the steel sheets according to the present invention, Steel Sheet Symbols I to L, which contained 1.8% or more manganese, had a YS of not more than 255 MPa and a TS within the range of 400 to 480 MPa. These results demonstrate that they were high-strength steel sheets with high workability. Steel Sheet Symbols M and N, which contained 1.6% manganese, had a TS of less than 400 MPa. In particular, Steel Sheet Symbol N, which had a volume percentage of the second phase of 0.3%, had somewhat higher YS relative to its strength. For the microstructure of the steel sheets of the present invention, the phase other than the second phase, shown in Table 4, was a ferrite phase.

**Table 3**

| | | | | | | | | | |
|---|---|---|---|---|---|---|---|---|---|
| (% by mass) | | | | | | | | | |

| Steel No. | C | Si | Mn | P | S | Al | N | Cr | Remarks |
|---|---|---|---|---|---|---|---|---|---|
| 5 | 0.017 | 0.02 | 2.0 | 0.01 | 0.008 | 0.040 | 0.0031 | 0.2 | Within the scope of the invention |
| 6 | 0.020 | 0.02 | 2.0 | 0.01 | 0.009 | 0.032 | 0.0027 | - | Within the scope of the invention |
| 7 | 0.020 | 0.02 | 1.8 | 0.01 | 0.008 | 0.035 | 0.0028 | - | Within the scope of the invention |
| 8 | 0.016 | 0.02 | 1.8 | 0.01 | 0.008 | 0.037 | 0.0033 | 0.2 | Within the scope of the invention |
| 9 | 0.018 | 0.02 | 1.6 | 0.01 | 0.008 | 0.020 | 0.0022 | 0.2 | Within the scope of the invention |
| 10 | 0.020 | 0.02 | 1.6 | 0.01 | 0.008 | 0.024 | 0.0021 | - | Within the scope of the invention |

**Table 4**

| | | | | | | | | | |
|---|---|---|---|---|---|---|---|---|---|
| Steel Sheet Symbol | Steel No. | Reduction rate in cold roiling (%) | Second phase | | Δr | Al (MPa) | YS (Mpa) | TS (MPa) | Remarks |
| | | | Type* | Volume percentage | | | | | |
| I | 5 | 84 | M | 0.5 | -0.03 | 35 | 209 | 412 | Invention example |
| J | 6 | 84 | M | 1.5 | 0.05 | 30 | 219 | 421 | Invention example |
| K | 7 | 84 | M | 1.0 | 0.02 | 35 | 235 | 420 | Invention example |
| L | 8 | 84 | M | 1.0 | -0.05 | 33 | 214 | 415 | Invention example |
| M | 9 | 84 | M | 0.7 | -0.10 | 42 | 224 | 390 | Invention example |
| N | 10 | 84 | M | 0.3 | 0.02 | 38 | 267 | 385 | Invention example |

| | | | | | | | | | |
|---|---|---|---|---|---|---|---|---|---|
| *M: Martensite phase | | | | | | | | | |

### EXAMPLE 3

Steel Nos. 11 to 19 were prepared by smelting according to the compositions shown in Table 5 and were formed into slabs by continuous casting. These slabs were hot-rolled under the same conditions as in Example 1, were pickled, and were cold-rolled to a thickness of 0.38 mm at a reduction rate of 84%. Subsequently, the sheets were subjected to recrystallization annealing and temper rolling under the same conditions as in Example 1 to prepare samples of Steel Sheet Symbols O to W. The resultant samples were examined as in Example 1.

The results are shown in Table 6. Steel Sheet Symbols O, Q to S, and U to W, according to the present invention, had a Δr within the range of -0.20 to 0.20 and an AI of not more than 50 MPa. These results demonstrate that the steel sheets had superior non-ageing properties and low planar anisotropy. In particular, the steel sheets that included a second phase composed substantially only of martensite in a volume percentage of not more than 5% and that contained no strengthening element other than chromium (Steel Sheet Symbols O, Q, U, and V) had a YS of not more than 255 MPa and a TS within the range of 400 to 480 MPa. These results demonstrate that they were high-strength steel sheets with high workability.

Steel Sheet Symbols F and T, which had compositions beyond the scope of the present invention, failed to have a Δr within the range of -0.2 to 0.2. In addition, when Steel Sheet Symbol P was plated with nickel, it exhibited significantly low platability.

**Table 5**

| | | | | | | | | | |
|---|---|---|---|---|---|---|---|---|---|
| (% by mass) | | | | | | | | | |

| Steel No. | C | Si | Mn | P | S | AI | N | Others | Remarks |
|---|---|---|---|---|---|---|---|---|---|
| 11 | 0.017 | 0.02 | 1.9 | 0.01 | 0.009 | 0.038 | 0.0027 | - | Within the scope of the invention |
| 12 | 0.018 | 0.03 | 1.9 | 0.01 | 0.008 | 0.033 | 0.0029 | - | Beyond the scope of the invention |
| 13 | 0.016 | 0.01 | 1.9 | 0.01 | 0.009 | 0.040 | 0.0028 | Cr: 0.5 | Within the scope of the invention |
| 14 | 0.016 | 0.01 | 1.9 | 0.01 | 0.009 | 0.041 | 0.0028 | Mo: 0.2 B: 0.005 | Within the scope of the invention |
| 15 | 0.035 | 0.01 | 2.0 | 0.01 | 0.009 | 0.041 | 0.0028 | Cr: 0.8 Mo: 0.6 B: 0.007 | Within the scope of the invention |
| 16 | 0.018 | 0.01 | 1.9 | 0.01 | 0.009 | 0.015 | 0.0028 | - | Beyond the scope of the invention |
| 17 | 0.018 | 0.01 | 1.9 | 0.01 | 0.008 | 0.020 | 0.0029 | - | Within the scope of the invention |
| 18 | 0.017 | 0.01 | 1.9 | 0.01 | 0.008 | 0.062 | 0.0029 | - | Within the scope of the invention |
| 19 | 0.011 | 0.01 | 1.9 | 0.01 | 0.008 | 0.033 | 0.0024 | - | Within the scope of the invention |

**Table 6**

| Steel Sheet Symbol | Steel No. | Reduction rate in cold rolling (%) | Second phase | | Δr | AI (MPa) | YS (MPa) | TS (MPa) | Remarks |
|---|---|---|---|---|---|---|---|---|---|
| | | | Type* | Volume percentage | | | | | |
| O | 11 | 84 | M | 0.5 | 0.12 | 35 | 210 | 450 | Invention example |
| P | 12 | 84 | M | 0.5 | 0.30 | 34 | 235 | 475 | Comparative example |
| Q | 13 | 84 | M | 1.5 | 0.05 | 30 | 226 | 425 | Invention example |
| R | 14 | 84 | M | 1.0 | 0.15 | 35 | 260 | 510 | Invention example |
| S | 15 | 84 | M | 8.2 | 0.15 | 35 | 270 | 552 | Invention example |
| T | 16 | 84 | M | 0.5 | 0.45 | 30 | 240 | 445 | Comparative example |
| U | 17 | 84 | M | 1.5 | 0.12 | 45 | 250 | 460 | Invention example |
| V | 18 | 84 | M | 1.5 | 0.08 | 40 | 245 | 430 | Invention example |
| W | 19 | 84 | M+B | 1.5+1.0 | 0.13 | 48 | 190 | 370 | Invention example |

| | | | | | | | | | |
|---|---|---|---|---|---|---|---|---|---|
| *M: Martensite phase; B: Bainite phase | | | | | | | | | |

### Industrial Applicability

The present invention allows production of a cold-rolled steel sheet having a thickness of 0.5 mm or less, superior non-ageing properties, namely, an AI of 50 MPa or less, and low planar anisotropy, namely, -0.20 ≤ Δr ≤ 0.20, by single continuous annealing. This avoids increased manufacturing costs and decreased productivity. The steel sheet is suitable for battery cans, which have thinner wall than conventional ones, and contributes to, for example, increases battery capacities.

## Claims

1. A cold-rolled steel sheet containing, by mass, 0.010% to 0.040% carbon, 0.02% or less silicon, 1.0% to 2.5% manganese, 0.02% or less phosphorus, 0.015% or less sulfur, 0.004% or less nitrogen, and 0.020% to 0.07% aluminum, the balance being iron and incidental impurities;
the steel sheet having a microstructure including a ferrite phase and a second phase, the volume percentage of the second phase being 0.2% to less than 10%;
the steel sheet having an AI of 50 MPa or less, a Δr of -0.20 to 0.20, and a thickness of 0.5 mm or less.

2. The cold-rolled steel sheet according to Claim 1, wherein the manganese content is 1.8% to 2.5% by mass.

3. The cold-rolled steel sheet according to Claim 1 or 2, further containing at least one element selected from the group consisting of chromium in an amount of 1% or less by mass, molybdenum in an amount of 1% or less by mass, and boron in an amount of 0.01% or less by mass.

4. The cold-rolled steel sheet according to Claim 1 or 2, further containing, by mass, 1% or less chromium.

5. A method for producing a cold-rolled steel sheet, comprising:
hot-rolling a slab at a finisher delivery temperature of an Ar₃ transformation point or higher and coiling the hot-rolled sheet at a coiling temperature of 540°C to 730°C, the slab containing, by mass, 0.010% to 0.040% carbon, 0.02% or less silicon, 1.0% to 2.5% manganese, 0.02% or less phosphorus, 0.015% or less sulfur, 0.004% or less nitrogen, and 0.020% to 0.07% aluminum, the balance being iron and incidental impurities;
cold-rolling the hot-rolled sheet at a reduction rate of 80% to 88% to form a cold-rolled sheet; and
continuously annealing the cold-rolled sheet at an annealing temperature of 700°C to 850°C.

6. The method according to Claim 5 for producing a cold-rolled steel sheet, wherein the manganese content of the slab used is 1.8% to 2.5% by mass.

7. The method according to Claim 5 or 6 for producing a cold-rolled steel sheet, wherein the slab used further contains at least one element selected from the group consisting of chromium in and amount of 1% or less by mass, molybdenum in an amount of 1% or less by mass, and boron in an amount of 0.01% or less by mass.

8. The method according to Claim 5 or 6 for producing a cold-rolled steel sheet, wherein the slab used further contains, by mass, 1% or less chromium.

9. A battery comprising a battery can formed of the steel sheet according to Claims 1 to 4.

10. A method for producing a battery, comprising a step of forming the steel sheet according to Claims 1 to 4 into a battery can by deep drawing.
